# DEMANDE DE BREVET EUROPEEN

(11) **EP 2 348 668 A1**
(43) Date de publication de la demande: **27.07.2011**
(21) Numéro de dépôt: 09306327.9
(22) Date de dépôt: 24.12.2009
(51) Int. Cl.: H04L 9/32, H04L 9/08

(54) **Courrier recommandé numérique**

(71) Demandeur: Gemalto SA, 92190 Meudon (FR)
(72) Inventeur: Rouchouze, Bruno, 83270 ST CYR SUR MER (FR)

(57) **Abrégé**

Procédé d'authentification de message électronique circulant entre un dispositif électronique communicant dit émetteur, un dispositif électronique communicant dit récepteur, et un dispositif électronique communicant dit PTT. Le procédé comprend les étapes de :
- Requête,
- Cachetage,
- Expédition,
- Validation,
- Ouverture.

## Description

L'invention concerne un procédé d'authentification de message électronique.

L'invention porte en particulier sur une transmission « en recommandé », d'un message électronique.

L'évolution récente des dispositifs électroniques communicants s'est faite en parallèle de l'évolution des réseaux de communication. En effet de l'ordinateur au téléphone mobile les dispositifs électroniques actuels peuvent échanger via bon nombre de moyens de communication.

Cette évolution des réseaux numériques s'est faite tant par leurs diversités que par leurs performances. Cela permet aujourd'hui de toucher une très grande majorité des dispositifs électroniques communicants, mais également, de permettre le transfert de données de grandes tailles.

La conjonction de ces deux axes d'évolution permet aujourd'hui d'utiliser les communications numériques dans pratiquement tous les contextes jusqu'alors réservés aux communications traditionnelles. Si le courrier électronique (e-mail) supplante peu à peu les échanges de courrier papier, les échanges de voix sur IP remplacent peu à peu les communications téléphoniques, il n'est à ce jour pas possible de remplacer un envoi de courrier en recommandé.

La présente invention propose de résoudre ce problème en mettant en oeuvre un nouveau procédé d'authentification de messages électroniques.

A cette fin, l'invention concerne, dans un premier temps, un procédé d'authentification de message électronique circulant entre un dispositif électronique communicant dit émetteur, et un dispositif électronique communicant dit récepteur, chacun comprenant, dans une mémoire non volatile, un algorithme cryptographique asymétrique ASYM, et comprenant en outre l'intervention d'un dispositif électronique communicant dit PTT, possédant au moins un couple de clés cryptographiques Kclose/Kopen au sens de la cryptographie asymétrique, ainsi qu'une référence unique EUID associée au couple de clés, le dispositif PTT étant indépendant des dits émetteur et récepteur. Le procédé comprend les étapes de :
- Requête, durant laquelle l'émetteur entre en contact avec le PTT et requiert une enveloppe électronique, cette enveloppe électronique étant composée de la référence EUID, ainsi que de la clé Kclose,
- Cachetage, durant laquelle l'émetteur chiffre le message électronique grâce à l'algorithme ASYM et à la clé Kclose pour obtenir message cacheté,
- Expédition, durant laquelle l'émetteur transmet, au récepteur, le message cacheté ainsi que la référence EUID
- Validation, durant laquelle le récepteur envoie la référence EUID au PTT, qui lui fournit en retour la clé cryptographique Kopen,
- Ouverture, durant laquelle le récepteur déchiffre le message cacheté grâce l'algorithme ASYM et à la clé Kopen, pour obtenir un message clair

Selon un mode d'implémentation, l'émetteur peut posséder un algorithme asymétrique ASYM2, et le récepteur peut posséder un couple de clés cryptographiques RKpriv/RKpub au sens de la cryptographie asymétrique, ainsi l'algorithme ASYM2. Dans ce mode de réalisation, l'étape d'expédition peut comprendre le chiffrement, par l'émetteur, de la référence EUID avec l'algorithme ASYM2 et la clé RKpub du récepteur pour obtenir une référence chiffrée. Dans une étape préalable, le dispositif électronique émetteur peut enregistrer, dans une mémoire électronique, la clé RKpub. Lors de l'étape de validation, le récepteur peut déchiffrer la référence chiffrée, avec l'algorithme ASYM2 et sa clé RKpriv pour obtenir la référence EUID.

Selon un autre mode d'implémentation, le récepteur peut posséder un algorithme asymétrique ASYM2, et l'émetteur peut posséder un couple de clés cryptographiques EKpriv/EKpub au sens de la cryptographie asymétrique, et l'algorithme ASYM2. Dans ce mode de réalisation, l'étape d'expédition peut comprendre le chiffrement, par l'émetteur, de la référence EUID avec l'algorithme ASYM2 et sa clé EKpriv pour obtenir une référence signée.

Dans une étape préalable, le dispositif électronique récepteur peut enregistrer, dans une mémoire électronique, la clé EKpub. Lors de l'étape de validation, le récepteur peut déchiffrer la référence signée avec l'algorithme ASYM2 et la clé EKpub de l'émetteur, pour obtenir la référence EUID.

Dans un mode d'implémentation, lors de l'étape de validation, le dispositif émetteur peut s'authentifier auprès du dispositif PTT, préalablement à l'envoi de la référence EUID.

Le dispositif électronique PTT, peut, lors de l'étape de validation, enregistrer dans une mémoire non volatile, au moins la référence EUID, ou bien notifier le dispositif électronique émetteur du traitement de la référence EUID.

Les algorithmes ASYM et ASYM2 peuvent être identiques.

D'autres caractéristiques et avantages de l'invention ressortiront clairement de la description qui en est faite ci-après, à titre indicatif et nullement limitatif, en référence aux dessins annexés dans lesquels :

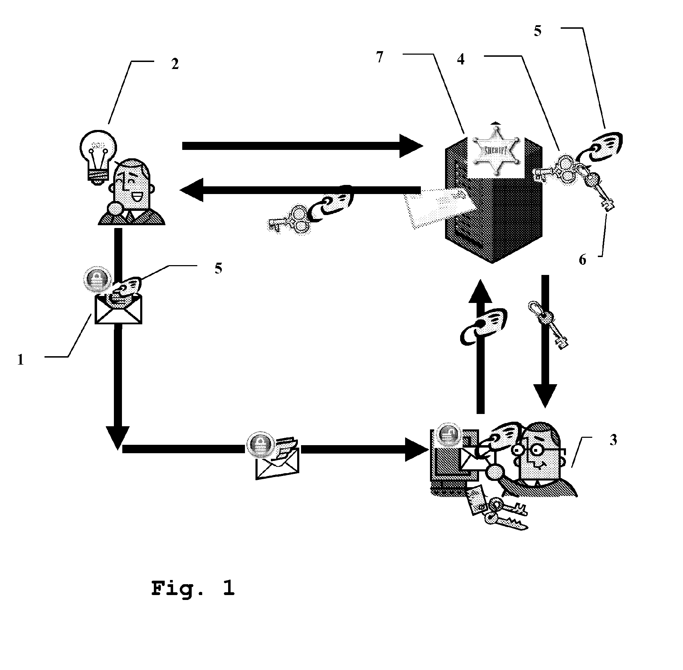

- La figure 1 représente une implémentation du procédé d'authentification selon l'invention.

Dans la figure 1, un message doit être échangé en mode « recommandé », entre un dispositif émetteur 2 et un dispositif récepteur 3. Ces deux acteurs peuvent être tous dispositifs électroniques, à partir du moment où ils sont aptes à exécuter des fonctions cryptographiques, et établir un canal de communication. Dans un mode particulièrement avantageux de l'invention, les fonctions d'émetteurs et de récepteur peuvent être incluses dans des terminaux de communication par exemple de type téléphones mobiles.

Afin d'implémenter l'invention, chacun des dispositifs émetteur et récepteur doivent chacun posséder, dans une mémoire électronique, un algorithme cryptographique asymétrique, par exemple de type RSA (pour Rivest, Shamir et Adleman).

La cryptographie asymétrique, ou cryptographie à clé publique est fondée sur l'existence de fonctions à sens unique.

Ainsi, la cryptographie à clé publique est un procédé asymétrique utilisant une paire de clés. Ces clés, généralement baptisées « clé publique » et « clé privée », sont construites de telle manière que, ce qui est chiffré avec l'aide d'une de ces clés ne peut être déchiffré que par la seconde.

Le principe est donc de distribuer la clé publique tout en conservant secrète la clé privée. Tout utilisateur possédant une copie de la clé publique pourra chiffrer des informations que seul le propriétaire de la clé privée pourra déchiffrer.

On peut noter qu'il est impossible de deviner la clé privée à partir de la clé publique.

La génération des couples clé publique/clé privée, ne fait pas l'objet de la présente invention. Tous les procédés décrits par l'état de l'art, ou à venir, qui permettent d'obtenir un tel couple de clé s'appliquent à la présente invention.

Le mode « recommandé » implique plusieurs critères. Le premier de ces critères est de garantir à l'émetteur, que le récepteur est bien entré en possession du message envoyé. Le second de ces critères est que le récepteur doit avoir la certitude que le message qu'il reçoit n'a pas été altéré durant le transport. Nous verrons dans la suite de la présente description, que le mode recommandé peut s'enrichir de fonctionnalités additionnelles.

Afin d'assurer l'échange du message en mode recommandé, un tiers de confiance "PTT," est nécessaire. Ce tiers de confiance à notamment comme fonction de fournir à l'émetteur, les moyens cryptographiques nécessaires à son envoi, mais également de fournir au récepteur le moyen cryptographique nécessaire à sa réception.

Lorsque l'émetteur souhaite envoyer le message, il établit un canal de communication avec le tiers de confiance. Ce canal de communication, comme tous les échanges numériques décrits dans la présente description, peuvent avantageusement être sécurisés par tous les moyens numériques connus de l'art antérieur. Cette sécurisation particulière des échanges ne faisant pas parti intégrante de l'invention, elle ne sera pas détaillée dans la suite de la présente description.

Par ce canal de communication, l'émetteur envoie au tiers de confiance "PTT" une requête indiquant son intention d'envoyer un courrier en la forme du recommandé. Le tiers de confiance possède un ensemble d'outils cryptographiques et notamment des triplets composés d'un couple de clés cryptographiques Kclose/Kopen établis conformément à la cryptographie asymétrique tel que défini précédemment, et un identifiant unique EUID. Un tel triplé selon l'invention est assimilable à une enveloppe recommandée numérique.

Dès réception de la requête de l'émetteur, le tiers de confiance "PTT" lui fournit la clé Kclose ainsi que l'identifiant. Dans un mode préféré de l'invention, cette fourniture peut-être assujettie à un paiement de l'émetteur auprès du tiers de confiance.

Le tiers de confiance "PTT" dès lors, enregistre cette enveloppe recommandée numérique comme étant utilisée.

L'émetteur, en possession de la clé Kclose et de l'identifiant, peut dès lors, préparer son envoi. Le message 1 doit être chiffré grâce à un algorithme asymétrique contenu dans l'émetteur, et à la clé Kclose. Cela lui permet d'obtenir un message cacheté. À cette étape du procédé, le seul moyen de « décacheter » le message, est de lui appliquer le même algorithme asymétrique mais avec la clé Kopen, seulement connu du tiers de confiance. L'émetteur lui-même, en possession de la clé Kclose, est incapable de décacheter ce message.

L'émetteur doit associer à son message cacheté l'identifiant unique EUID, qu'il a reçu du tiers de confiance. Le tout est transmis au récepteur.

Dès réception de ces informations, le récepteur en extrait l'identifiant unique EUID. Un canal de communication doit être établi entre le récepteur et le tiers de confiance. Le récepteur transmet l'identifiant unique EUID qu'il a reçu, au tiers de confiance. Le tiers de confiance "PTT" en présence de cet identifiant unique EUID, est apte à identifier l'enveloppe recommandée numérique qui lui est associée. Dès lors il peut fournir au récepteur la clé Kopen associée à cette enveloppe. Une fois en possession de cette clé, le récepteur peut décacheter le message qu'il a reçu, et ainsi obtenir le message en clair.

Les critères essentiels permettant de définir un envoi en recommandé sont ainsi garantis par le procédé selon l'invention. En effet le tiers de confiance "PTT" en recevant l'identifiant unique EUID, a la preuve que le récepteur a bien reçue le message qu'il lui a été envoyé, le récepteur en obtenant la clé Kopen du tiers de confiance "PTT" est ainsi assuré que personne n'a pu décacheter le message reçu.

Une telle implémentation de l'invention permet également d'assurer un maximum de confidentialité et d'anonymat. En effet la fourniture à l'émetteur des informations nécessaires à son envoi peut se faire de manière anonyme, de la même manière que l'échange identifiant unique EUID, contre clé Kopen.

Il est même envisageable un échange anonyme entre l'émetteur et le récepteur, de par le fait que l'identité du récepteur n'est pas nécessaire à l'émetteur, et l'identité de l'émetteur n'est pas nécessaire au récepteur. Il est donc envisageable que le message cacheté ainsi, soit déposé par l'émetteur dans une mémoire, par exemple sur un serveur Internet, et que le récepteur aille chercher ce message à cette adresse.

Dans un mode particulier d'implémentation de l'invention, le tiers de confiance, à réception de l'identifiant unique EUID, peut en informer l'émetteur. Cette implémentation nécessite que le tiers de confiance "PTT" soit apte à contacter l'émetteur, mais ajoute la fonctionnalité appelée « accusé de réception », qui assure l'envoyeur que le message est arrivé à son destinataire.

Dans un mode préféré de réalisation de l'invention, l'émetteur peut sécuriser l'échange en identifiant cryptographiquement le récepteur. En effet si le récepteur possède son propre couple de clés privées/publiques RKpriv/RKpub, il est possible à l'émetteur de chiffrer tout ou partie des éléments transmis, avec un algorithme cryptographique asymétrique, ainsi que la clé publique RKpub du récepteur. Ainsi il a la certitude que personne d'autre que le récepteur ne peut prendre connaissance des éléments ainsi chiffrés. Un mode minimaliste de cette implémentation consiste en ne chiffrer que l'identifiant unique EUID. En effet si une personne tentait d'intercepter ce message à la place du récepteur légitime, il lui serait impossible de décacheter le message n'étant pas en possession de la clé Kopen, et il lui serait impossible d'obtenir l'identifiant unique n'étant pas en possession de la clé privée RKpriv du récepteur.

Dans un troisième mode de réalisation, il est possible de s'attacher plus particulièrement à l'identité de l'émetteur. En effet si l'émetteur possède son propre couple de clés publiques/privées EKpriv/EKpub, il lui est possible d'apposer sa signature sur tout ou partie des éléments qu'il envoie. En effet si l'émetteur chiffre avec un algorithme cryptographique asymétrique ainsi que sa clé privée EKpriv un élément, sa clé publique EKpub sera nécessaire pour déchiffrer cet élément. Cela permettra de garantir au récepteur l'identité de l'émetteur. Dans un mode minimaliste de cette implémentation, l'émetteur ne signera que l'identifiant unique EUID, associé au message cacheté qu'il souhaite envoyer. Ainsi, à réception, le récepteur devra appliquer le même algorithme cryptographique asymétrique que l'émetteur, mais cette fois associé à la clé publique EKpub de l'émetteur, afin d'obtenir l'identifiant unique EUID qui lui permettra d'entrer en possession de la clé de décachetage. Ainsi le récepteur a une preuve que l'identifiant lui a bien été envoyé par l'émetteur.

Dans un mode préféré d'implémentation de l'invention, les deux modes précédents peuvent être combinés. En effet si chacun des deux acteurs, émetteur et récepteur, possède respectivement un couple de clés cryptographiques EKpriv/EKpub et RKpriv/RKpub, il devient possible de sécuriser complètement le schéma d'échange. L'émetteur peut signer tout ou partie des éléments envoyés avec sa clé privée EKpriv, et appliquer un chiffrement avec la clé publique RKpub du récepteur. Ainsi, le récepteur, doit appliquer sa clé privée RKpriv dans un premier temps, et ainsi avoir la garantie que personne d'autre que lui n'a pu consulter le contenu de l'élément en question. Il doit appliquer dans un second temps, la clé publique EKpub de l'émetteur, et ainsi avoir confirmation de l'identité de celui-ci. Seulement une fois ces deux opérations réalisées, le récepteur est en possession des éléments en clair et peu finaliser l'échange.

Lors de ces différents modes de réalisation, il est nécessaire que les différents acteurs en présence s'échangent leurs clés publiques. De nombreux moyens sont connus de l'art antérieur pour effectuer une telle transaction, mais le tiers de confiance "PTT" défini selon l'invention, peut avantageusement détenir cette fonction.

Dans une implémentation particulièrement sécurisée de l'invention, il est envisageable de transmettre la clé Kopen au destinataire, chiffrée avec sa clé publique RKpub.

Une méthode particulièrement avantageuse de réalisation de cette étape consiste, durant l'étape de requête, que l'émetteur informe le tiers de confiance "PTT" de l'identité du récepteur. Dès lors, le tiers de confiance "PTT" obtient la clé publique RKpub de ce destinataire, chiffre la clé Kopen correspondant à l'enveloppe numérique fournie à l'émetteur, enregistre cette clé « kopen chiffrée » dans une mémoire, et détruit la clé kopen en clair.

Ainsi, il n'est aucunement possible que la clé Kopen puisse être accessible, même par malveillance, par une personne autre que le destinataire désigné.

Dans un autre mode d'implémentation, lors de l'étape de validation, le récepteur envoie sa propre clé publique au tiers de confiance « PTT », qui lui retourne la clé Kopen chiffrée avec celle-ci.

## Revendications

1. Procédé d'authentification de message électronique circulant entre un dispositif électronique communicant (2) dit émetteur, et un dispositif électronique communicant (3) dit récepteur, chacun comprenant, dans une mémoire non volatile, un algorithme cryptographique asymétrique ASYM, et comprenant en outre l'intervention d'un dispositif électronique communicant (7) dit PTT, possédant au moins un couple de clés cryptographiques (4, 6) Kclose/Kopen au sens de la cryptographie asymétrique, ainsi qu'une référence unique (5) EUID associée audit couple de clés, ledit dispositif PTT (7) étant indépendant des dits émetteur et récepteur,
**caractérisé en ce que** le procédé comprend les étapes de :
- Requête, durant laquelle ledit émetteur (2) entre en contact avec ledit PTT (7) et requiert une enveloppe électronique, ladite enveloppe électronique étant composée de ladite référence (5) EUID, ainsi que de ladite clé (4) Kclose,
- Cachetage, durant lequel ledit émetteur (2) chiffre ledit message électronique grâce audit algorithme ASYM et à la clé Kclose (4) pour obtenir le message cacheté (1)
- Expédition, durant laquelle ledit émetteur (2) transmet, audit récepteur (3), le message cacheté (1) ainsi que ladite référence (5) EUID
- Validation, durant laquelle ledit récepteur (3) envoi ladite référence (5) EUID audit PTT, qui lui fournit en retour la clé cryptographique (6) Kopen,
- Ouverture, durant laquelle le récepteur (3) déchiffre ledit message cacheté (1) grâce à l'algorithme ASYM et à la clé Kopen (6), pour obtenir un message clair

2. Procédé selon la revendication 1, dans lequel ledit émetteur possède un algorithme asymétrique ASYM2, et ledit récepteur possède un couple de clés cryptographiques RKpriv/RKpub au sens de la cryptographie asymétrique, et ledit algorithme ASYM2,
**caractérisé en ce que**, l'étape d'expédition comprend le chiffrement, par ledit émetteur, de la référence EUID avec l'algorithme ASYM2 et la clé RKpub du récepteur pour obtenir une référence chiffrée

3. Procédé selon la revendication 2 **caractérisé en ce que** dans une étape préalable, ledit dispositif électronique émetteur enregistre, dans une mémoire électronique, ladite clé RKpub.

4. Procédé selon l'une quelconques des revendications 2 ou 3, **caractérisé en ce que**, lors de l'étape de validation, le récepteur déchiffre ladite référence chiffrée avec l' algorithme ASYM2 et sa clé RKpriv pour obtenir la référence EUID

5. Procédé selon la revendication 1, dans lequel ledit récepteur possède un algorithme asymétrique ASYM2, et ledit émetteur possède un couple de clés cryptographiques EKpriv/EKpub au sens de la cryptographie asymétrique, et ledit algorithme ASYM2,
**caractérisé en ce que**, l'étape d'expédition comprend le chiffrement, par ledit émetteur, de la référence EUID avec l'algorithme ASYM2 et sa clé EKpriv pour obtenir une référence signée.

6. Procédé selon la revendication 5 **caractérisé en ce que** dans une étape préalable, ledit dispositif électronique récepteur enregistre, dans une mémoire électronique, ladite clé EKpub.

7. Procédé selon l'une quelconque des revendications 5 ou 6, **caractérisé en ce que**, lors de l'étape de validation, le récepteur déchiffre ladite référence signée avec l'algorithme ASYM2 et la clé EKpub de l'émetteur, pour obtenir la référence EUID

8. Procédé selon l'une quelconque des revendications 1 à 7, **caractérisé en ce que**, lors de l'étape de validation, ledit dispositif émetteur s'authentifie auprès dudit dispositif PTT préalablement à l'envoi de ladite référence EUID

9. Procédé selon l'une quelconque des revendications 1 à 8, **caractérisé en ce que**, ledit dispositif électronique PTT, lors de l'étape de validation enregistre dans une mémoire non volatile, au moins la référence EUID

10. Procédé selon l'une quelconque des revendications 1 à 8, **caractérisé en ce que**, ledit dispositif électronique PTT, lors de l'étape de validation notifie ledit dispositif électronique émetteur du traitement de la référence EUID.

11. Procédé selon l'une des revendications 2 à 7, **caractérisé en ce que** les algorithmes ASYM et ASYM2 sont identiques.
